# EUROPÄISCHE PATENTSCHRIFT

(11) **EP 0 632 668 B1**
(45) Veröffentlichungstag und Bekanntmachung des Hinweises auf die Patenterteilung: **24.10.2001**
(21) Anmeldenummer: 94108719.9
(22) Anmeldetag: 07.06.1994
(51) Int. Cl.: H04Q 3/545

(54) **Verfahren zum Aktualisieren eines Systemprogramms in einer Vermittlungseinrichtung**
Method for updating a system program in an exchange
Méthode d'actualisation d'un programme de système dans une centrale de communication

(30) Priorität: 30.06.1993 DE 4321774
(43) Veröffentlichungstag der Anmeldung: 04.01.1995
(73) Patentinhaber: SIEMENS AKTIENGESELLSCHAFT, 80333 München (DE)
(72) Erfinder: Blondel, Erik, Ing., B-8755 Ruiselede (BE); Verhulst, Frans, Ing., B-9070 Destelbergen (BE); Ulrich, Johann, Ing., A-3424 Zeiselmauer (AT)

(56) Entgegenhaltungen:
- EP-A- 0 492 251
- US-A- 4 703 416
- K. Y. NIENG: "Updating software in a real-time distributed system" PROCEEDINGS OF THE NATIONAL ELECTRONICS CONFERENCE, 24. - 26.September 1984, ROSEMONT, ILLINOIS (USA), Seiten 57-60, XP002043614
- R. H. YACOBELLIS ET AL.: "The 3B20D Processor and DMERT Operating System: Field Administration Subsystems" THE BELL SYSTEM TECHNICAL JOURNAL, Bd. 62, Nr. 1, 1.Januar 1983, USA, Seiten 323-339, XP002043615
- D. FERENCE/F. WESOLOWSKI: "Techniques for Upgrading Software in ITT 1210 Stored Program-Control Digital Switch" ELECTRO/81 CONFERENCE RECORD, Bd. 6, 7. - 9.April 1981, NEW YORK (USA), Seiten 1-7, XP002043553
- R L ENGRAM ET AL.: "Transparent software and hardware changes in a telecommunication system" FIFTH INTERNATIONAL CONFERENCE ON SOFTWARE ENGINEERING FOR TELECOMMUNICATION SWITCHING SYSTEMS, 4. - 8.Juli 1983, LUND (SWEDEN), Seiten 157-162, XP002004485

## Beschreibung

Programmgesteuerte Vermittlungseinrichtungen dienen zur Verbindung von Kommunikationsendgeräten untereinander und zur Verbindung dieser Endgeräte mit Kommunikationsnetzen, insbesondere öffentlichen Netzen. Die Vielfalt bekannter Vermittlungseinrichtungen erstreckt sich von einfachen Telefonvermittlungssystemen für die ausschließlich Übertragung von Sprache bis hin zu komplexen ISDN-Kommunikationssystemen mit simultaner Mehrfach- oder auch Mischkommunikation von Sprache, Text, Bild und Daten.

Aus einer Sonderausgabe von "TELCOM Report" - ISDN im Büro-1985, ISBN 3-8009-3846-4, Siemens Aktiengesellschaft, ist ein Kommunikationssystem der zuletzt genannten Art bekannt.

Vermittlungseinrichtungen sind, unabhängig von ihrem Komplexitätsgrad im Prinzip als digitale Datenverarbeitungsanlagen zu verstehen, die in engem funktionalem Zusammenhang mit einer Vielzahl von vermittlungstechnikbezogenen Peripherieeinheiten stehen.

Der programmtechnische Teil, allgemein mit System-Software bezeichnet, einer Vermittlungseinrichtung ist in der Regel aufgaben- bzw. funktionsorientiert strukturiert und gliedert sich in eine Vermittlungstechnik-, eine Sicherheitstechnikund eine Betriebstechnik-Softwarekomponente. Zu jedem dieser Softwarekomponenten gehört jeweils eine Vielzahl von funktionsbezogenen Programm-Modulen, deren Abarbeitung in Form sogenannter "Tasks" von einem Multitasking-Betriebssystem koordiniert wird.

Innerhalb der Vermittlungs-Software, die sich in die funktionskomplexe Peripherietechnik, Leitungstechnik und Vermittlungstechnik unterteilen läßt, führt die Peripherietechnik im wesentlichen Daten- und Informations-Transportfunktionen aus. Die Leitungstechnik hat die Aufgabe, die Schnittstelle zur Peripherietechnik an die ISDN-Schnittstelle zur Vermittlungstechnik anzupassen. Die Vermittlungstechnik erbringt die eigentlichen Leistungen für die Benutzeroberfläche der Endgeräte bzw. für die Schnittstellen zu den verschiedenen Netzen.

Die Sicherheits-Software sammelt auftretende Fehlersignale aus Soft- und Hardware-Komplexen und veranlaßt die erforderlichen Schritte um Fehler zu beheben, fehlerhafte Funktionskomplexe durch andere zu ersetzen und entsprechende Fehlermeldungen auf einem, an die Vermittlungseinrichtung anschließbaren Betriebsterminal zur Anzeige zu bringen.

Unter Betriebstechnik ist die Verwaltungs- und Wartungs-Software der Vermittlungseinrichtung zu verstehen, die dafür vorgesehen ist, um das Inbetriebsetzen und Inbetriebhalten sowie das Steuern der gesamten Vermittlungseinrichtung zu ermöglichen. Dazu zählt auch das Aktivieren und Deaktivieren von Systemfunktionen sowie das Erfassen und Archivieren aller betrieblichen Veränderungen des Gesamtsystems.

Die Betriebstechnik stellt gewissermaßen eine Schnittstelle zur Funktioneneinstellung einer programmgesteuerten Vermittlungeinrichtung dar. Diese Schnittstelle basiert auf einer Vielzahl von betriebstechnischen Einzelanweisungen, die nach vermittlungstechnischen Gesichtspunkten strukturiert sind und gewissermaßen das Grundgerüst zur Einflußnahme auf die Vermittlungseinrichtung darstellen.

Mit einem Großteil der zur Verfügung stehenden betriebstechnischen Einzelanweisungen können unmittelbar die in einer Datenbasis der Vermittlungseinrichtung hinterlegten betriebstechnikbezogenen Informationen beeinflußt werden, die das Verhalten und die Funktionsweise der Vermittlungseinrichtung, z.B. gegenüber den angeschlossenen Teilnehmerendgeräten, festlegen.

In der eingangs genannten Literaturstelle werden auf Seite 104 ff. diese betriebstechnischen Einzelanweisungen als "AMO" bezeichnet (Administration Maintenance Order). Weitere Informationen zur Strukturierung und Implementierung betriebstechnisch orientierter Komponenten in einer programmgesteuerten Vermittlungseinrichtung sind aus der EP-0 477 414 zu beziehen.

Die durch diese Betriebstechnik-Schnittstelle geschaffenen Möglichkeiten zur Einflußnahme auf das Verhalten und die Funktionsweise einer Vermittlungseinrichtung haben in vielen Fällen, insbesondere bei mittleren und kleineren Anlagen ein Maß an Variabilität vermittelt, das unter dem Kosten-Nutzen-Aspekt eine Ladbarkeit der Systemsoftware nicht unbedingt für erforderlich erscheinen läßt. In einer Vielzahl von Vermittlungseinrichtungen wurde deshalb die Software in Festwertspeichern hinterlegt, die üblicherweise als "ROM" (Read-Only-Memory) ausgebildet sind und auf Baugruppen der Vermittlungseinrichtung kontaktiert sind.

Den Vorteilen einer Hinterlegung der Systemsoftware in Festwertspeichern, die z.B. in einem schnelleren "Hochlaufen" der Anlage oder in einem geringeren gerätetechnischen und damit finanzielleren Aufwand liegen, steht stets ein größerer Aufwand entgegen, um Änderungen der Systemsoftware vorzunehmen, z.B. um neue Leistungsmerkmale, Protokollabläufe oder neue Funktionalitäten zu implementiern. Üblicherweise müssen dazu nämlich sämtliche Festwertspeicher ersetzt werden.

Aus der Druckschrift "Transparent Software and Hardware Changes in a Telecommunication System" von R. L. Engram et al. zur "Fifth International Conference on Software Engineering for Telecommunication Switching Systems", 4. bis 8. Juli 1983, Lund (Sweden), Seiten 157 bis 162, ist ein Verfahren zum Aktualisieren einzelner Funktionen eines Softwaresystems einer Vermittlungseinrichtung bekannt. Hierbei wird zum Austausch einer zur aktualisierenden Funktion eine aktualisierte Fassung dieser Funktion in einen Schreib-Lesespeicher der Vermittlungseinrichtung geladen und zukünftige Aufrufe dieser Funktion werden durch Änderung eines sogenannten Transfer-Vektors von der ursprünglichen Funktion zur aktualisierten Funktion umgelenkt. Ein Transfer-Vektor stellt dabei eine Adresse einer aufzurufenden Funktion dar, die in einer vorgegebenen Speicherzelle hinterlegt ist, über die die betreffende Funktion durch einen indirekten Sprung aufzurufen ist. Mit einem Überschreiben des Transfer-Vektors einer zu aktualisierenden Funktion mit der Startadresse der aktualisierten Funktion werden alle zukünftigen Aufrufe auf die aktualisierte Funktion umgeleitet. Dieses Verfahren setzt jedoch voraus, daß jeder Aufruf jeder potentiell zu aktualisierenden Funktion ausschließlich indirekt über solche Transfer-Vektoren erfolgt, die zudem nicht in einem Festwertspeicher hinterlegt sein dürfen. Zum aktualisieren eines beliebigen, in einem Festwertspeicher einer Vermittlungseinrichtung hinterlegten Systemprogramms ist dieses Verfahren somit nicht geeignet.

Aufgabe der vorliegenden Erfindung ist es, für eine programmgesteuerte Vermittlungseinrichtung mit einem in Festwertspeichern hinterlegten Systemprogramm ein Verfahren anzugeben, das eine Aktualisierung des Systemprogrammes bei in der Vermittlungseinrichtung unverändert belassenen Festwertspeichern ermöglicht.

Gelöst wird diese Aufgabe durch die im Patentanspruch 1 angegebenen Merkmale.

Bei dem erfindungsgemäßen Verfahren wird die Betriebstechnikschnittstelle gewissermaßen zweckentfremdet, d.h. Funktionskomponenten der Betriebstechnik werden für etwas benutzt, für das sie prinzipiell nicht vorgesehen sind. Unter der Vielzahl der von der Betriebstechnik zur Verfügung gestellten Einzelanweisungen befindet sich üblicherweise auch eine Speicherzugriffsanweisung, mit der eine Speicheradresse spezifiziert werden kann, an deren Stelle im Zusammenhang mit der Zugriffsanweisung eingegebene Informationen (Daten) gespeichert werden sollen. Diese Speicherzugriffsanweisung wurde nur dafür implementiert, um in der Datenbasis der Vermittlungseinrichtung gezielt Änderungen vornehmen zu können.

Das erfindungsgemäße Verfahren macht sich diese Speicherzugriffsanweisung zu Nutze, um von einem als datenverarbeitende Einrichtung, (z.B. einem Personalcomputer) ausgebildeten Betriebsterminal ein in diesem Betriebsterminal gespeichertes, aktualisiertes Systemprogramm in einen freien Speicherbereich des Schreib-Lesespeichers der Vermittlungseinrichtung zu übertragen, d.h. zu kopieren.

Die Einspeicherung des aktualisierten Systemprogrammes im Schreib-Lesespeicher stellt einen ersten Schritt des erfindungsgemäßen Verfahrens dar, wobei allein durch die Hinterlegung des aktualisierten Systemprogrammes dieses der programmausführenden Einrichtung z.B. einem Mikroprozessor noch nicht als gültiges Systemprogramm zugewiesen ist.

In einem zweiten Schritt des erfindungsgemäßen Verfahrens wird die programmausführende Einrichtung, im folgenden Systemprozessor genannt, mit Hilfe einer Speicherzugriffsanweisung der Betriebstechnikschnittstelle auf das neu eingespeicherte aktualisierte Systemprogramm umgeleitet.

Bevor im nachfolgenden Ausführungsbeispiel eine Verfahrensweise für diese Umleitung näher beschrieben werden soll, erscheint es zunächst zum besseren Verständnis erforderlich, auf bekannte Prinzipien im Zusammenhang mit einem Multitasking-Betriebssystem näher einzugehen.

Um den speziellen Steuerungsaufgaben gerecht werden zu können, sind bekannte programmgesteuerte Vermittlungseinrichtungen mit einem sogenannten Multitasking-Betriebssystem versehen, das die für eine Vermittlungseinrichtung typische Vielzahl von quasi gleichzeitig anfallenden und auch zu erledigenden Einzelaufgaben koordiniert. Eine wesentliche Aufgabe dieses Betriebssystems besteht darin, in Abhängigkeit von eingetroffenen oder intern gebildeten Anreizen, dem Systemprozessor, der die eigentliche programmgesteuerte Einheit der Vermittlungseinrichtung darstellt, entsprechende, für eine Reaktion auf die betreffenden Anreize vorgesehene Verarbeitungsvorschriften zur Ausführung zuzuweisen.

Solche Anreize, die z.B. die Form von 8 Bit-Wörtern haben können, werden u.a. von den an die Vermittlungseinrichtung angeschlossenen Endgeräten abgegeben, wenn eine Bedienerperson an einem Endgerät Funktionen (z.B. die Uhrzeitanzeige) .auslöst. Bei jeder ausgelösten Funktion gibt das Endgerät einen Anreiz an die Kommunikationsanlage ab, wobei den Funktionen unterschiedliche Anreize, Z.B. in Form verschiedener Binärkombinationen des 8 Bit-Wortes zugeordnet sind.

Jeder Anreiz wird in der Vermittlungseinrichtung als Erfordernis angesehen, eine dem Anreiz individuell zugeordnete Verarbeitungsvorschrift dem Systemprozessor zur Ausführung zuzuweisen. Für jeden möglichen Anreiz stehen deshalb anreizindividuelle Verarbeitungsvorschriften zur Verfügung, die als Programm-Module im Systemspeicher hinterlegt sind. Da jedes Programm-Modul gewissermaßen zur Realisierung einer bestimmten Aufgabe dient, wird es bei Abarbeitung durch den Systemprozessor als "Task" bezeichnet.

Um dem Betriebssystem bei Vorliegen einer Vielzahl eingetroffener Anreize eine Entscheidungshilfe zu geben, welchem der Anreize als nächstes nachgekommen werden sollte und welche Anreize noch Zeit für eine Bearbeitung haben, ist jedem möglichen Anreiz bzw. dem durch den Anreiz bezeichneten Programm-Modul eindeutig ein Prioritätswert zugeordnet.

Zur Bewältigung der an das Betriebssystem gestellten Koordinations- und Verwaltungsaufgaben sind im Betriebssystem mehrere Teilsysteme, sogenannte Subsysteme vorgesehen, von denen eines als Zuteilungssubsystem bezeichnet wird. Dieses Subsystem ermittelt aus den in einer Prozeßliste vermerkten Anreize jeweils denjenigen Anreiz mit der höchsten Priorität und weist dann das von diesem Anreiz bezeichnete Programm-Modul dem Systemprozessor zur Ausführung zu.

Ein momentan dem Systemprozessor zugewiesenes Programm-Modul bleibt solange dem Systemprozessor zugewiesen, bis entweder das Zuteilungssubsystem in der Prozeßliste einen gegenüber dem das momentan laufende Programm-Modul bezeichnenden Anreiz höherprioren Anreiz ermittelt oder bis die betreffende "Task" ihre weitere Ausführung einstellt. Letzteres trifft auch dann zu, wenn eine "Task" auf das Eintreffen von Informationen warten muß.

Prinzipiell befindet sich jede "Task" in einem Betriebssystem zu einem beliebigen Zeitpunkt in genau einem von drei Betriebszuständen, die als "laufend", "bereit" und "schlafend" bezeichnet werden. Laufend ist demnach diejenige "Task", die im Moment vom Systemprozessor ausgeführt wird, d.h. deren Programmodul dem Systemprozessor zugeteilt ist. Bereit sind alle "Tasks", die sich um Ausführung durch den Systemprozessor bewerben, also deren Programmodule in der Prozeßliste als ablaufbereit vermerkt sind. Schlafend sind die "Tasks", die auf das Eintreffen bestimmter Informationen warten.

Eine dieser "Tasks" dient in bekannten programmgesteuerten Vermittlungseinrichtungen dazu, um von einem Betriebsterminal an die Vermittlungseinrichtung übermittelte Informationen in Empfang zu nehmen und abzuspeichern. Diese Informationen bestehen aus einer Folge von alphanumerische Zeichen repräsentierenden binären Datenworten. Mit Eintreffen eines vom Betriebsterminal gesendeten Datenwortes wird ein sogenannter Interrupt ausgelöst, der im Betriebssystem dazu führt, daß eine "Lese-Task" ablaufbereit wird. Sobald das Zuteilungssubsystem die "Lese-Task" zur Ausführung dem Systemprozessor zugewiesen hat, wird das von dem Betriebsterminal übermittelte alphanumerische Zeichen gelesen und an eine betriebstechnikorientierte "Task" weitergereicht. Danach versetzt sich diese "Lese-Task" selbst in einen schlafenden Zustand.

Der Übergang von der Lese-Task zum Zuteilungssubsystem, also die Phase, in der sich die Lese-Task selbst in den schlafenden Zustand versetzt, beinhaltet einen programmtechnischen Sprung von dert Lese-Task auf eine Programmadresse innerhalb des Zuteilungssubsystems; diese Programmadresse wird als Rücksprungadresse bezeichnet. Im Regelfall hat jede Task ihre individuelle Rücksprungadresse, die in einem Adressenspeicherbereich im Schreib-Lesespeicher hinterlegt ist. Dabei ist vom Betriebssystem unveränderlich festgelegt, an welcher Speicheradresse die Rücksprungadressen zu den jeweiligen Tasken gespeichert sind.

Das erfindungsgemäße Verfahren sieht nun vor, die Rücksprungadresse für die Lese-Task durch eine Startadresse des aktualisierten Systemprogramms zu überschreiben. Dies geschieht wiederum mit einer Speicherzugriffsanweisung, die auf die die Rücksprungadresse der Lese-Task beinhaltende Adresse im Schreib-Lesespeicher gerichtet ist.

Dadurch daß die Rücksprungadresse der Lese-Task in die Startadresse des aktualisierten Systemprogramms geändert wurde, erfolgt beim Übergang der Lese-Task in den schlafenden Zustand ein Programmsprung in das aktualisierte, im Schreib/Lesespeicher hinterlegte Systemprogramm, das fortan als das "gültige" Systemprogramm der Vermittlungseinrichtung behandelt wird.

Anhand der Zeichnung wird im folgenden ein Ausführungsbeispiel der Erfindung näher erläutert. Dabei zeigen:
- Figur 1: ein schematisches Blockschaltbild mit Steuerkomponenten einer Vermittlungseinrichtung und einem an diese angeschlossenen Betriebsterminal,
- Figur 2: eine schematische Darstellung zur Veranschaulichung der bei Aktivierung und Deaktivierung einer Task im Betriebssystem der Vermittlungseinrichtung auftretenden Programmsprünge.
- Figur 3a, b: ein Ablaufdiagramm zur Veranschaulichung der bei der Durchführung des erfindungsgemäßen Verfahrens im Betriebsterminal ablaufenden Verfahrensschritte.

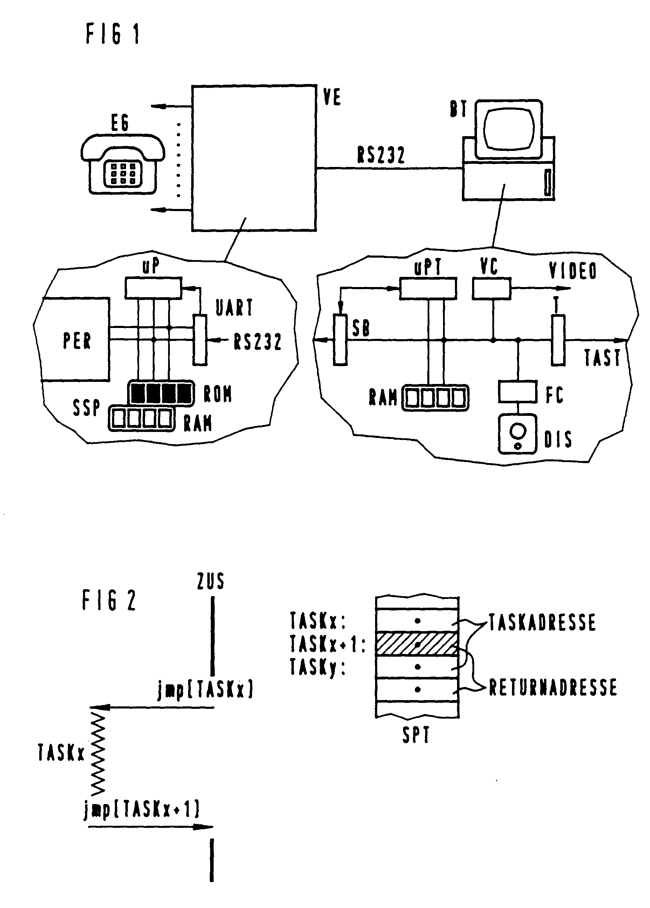

In Figur 1 sind anhand eines Blockschaltbildes die im wesentlichen zur Steuerung einer programmgesteuerten Vermittlungseinrichtung VE, z.B. einer Telefonnebenstellenanlage, gehörenden Komponenten dargestellt. Eine Prozessoreinrichtung UP, z.B. ein Mikroprozessor vom Typ SAB80XXX, ist über einen Adreßbus, einen Datenbus und einen Steuerbus mit einem Systemspeicher SSP verbunden. Dieser Systemspeicher SSP besteht aus Halbleiter-Speicherbausteinen unterschiedlichen Speichertyps; einem ROM-Speicherbereich, in dem das gesamte Systemprogramm unabänderlich hinterlegt ist und einem RAM-Speicherbereich, der als Schreib-Lese-Arbeitsspeicher dient. An den Daten- und Steuerbus ist zudem ein Schnittstellenbaustein UART angeschlossen, der die über eine serielle Schnittstelle von einem Betriebsterminal BT übermittelten Binärinformationen empfängt und in ein paralleles Datenformat des Datenbusses wandelt. An den Daten- und Steuerbus sind außerdem noch vermittlungstechnik-spezifische Einheiten PER angeschlossen, die z.B. zur Anpassung der an die Vermittlungseinrichtung VE angeschlossenen Endgeräte EG dienen, auf die aber im folgenden nicht näher eingegangen wird.

Als Betriebsterminal BT ist z.B. ein Personalcomputer vorgesehen. Dieser weist üblicherweise einen Mikroprozessor UPT, einen Schreib-Lese-Speicher RAM, einen Schnittstellenbaustein SB zur Bildung einer seriellen Schnittstelle, einen Kontrollbaustein FC zur Ansteuerung eines Diskettenlaufwerks DS und Steuerbausteine VC, T zur Ansteuerung einer optischen Anzeige bzw. einer Tastatur auf.

Die Vermittlungseinrichtung VE ist mit dem Betriebsterminal BT über eine Schnittstellenleitung RS232 verbunden, über die vom Betriebsterminal BT betriebstechnische Anweisungen an die Vermittlungseinrichtung VE übertragen werden können. Die betriebstechnischen Anweisungen bestehen üblicherweise aus einer Folge von alphabetischen Zeichen, denen eine Vielzahl von numerischen Zeichen nachfolgen. Die Zeichen werden über die Schnittstellenleitung nacheinander übermittelt und bei jedem Eintreffen eines Zeichens in der Vermittlungseinrichtung VE löst der Schnittstellenbaustein UART einen Interrupt aus, der an die Prozessoreinrichtung UP weitergeleitet wird der dann seinerseits veranlaßt, daß das empfangene Zeichen vom Schnittstellenbaustein UART ausgelesen wird. Das ausgelesene Zeichen wird dann an die betriebstechnische Softwarekomponente weitergegeben, die ihrerseits dann nach Eintreffen sämtlicher die betriebstechnische Anweisung spezifizierenden Zeichen die betreffende Anweisung ausführt.

In Figur 2 ist symbolisch dargestellt, wie üblicherweise der programmtechnische Übergang vom Zuteilungssubsystem ZUS im Betriebssystem der Vermittlungseinrichtung VE zu einer als nächstes ablaufenden Task X vorgenommen wird. Insbesondere soll stark vereinfacht gezeigt werden, wie diese Task im Betriebssystem zum Ablauf gebracht wird und wie sie beendet wird.

Die Task X ist z.B. die in bekannten Vermittlungseinrichtungen zum Auslesen des im Schnittstellenbaustein UART empfangenen Zeichens vorgesehene "Lese-Task". Das Zuteilungssubsystem ZUS greift für die Aktivierung einer Task auf einen Speicherbereich SPT zu, in dem zu jeder dem Betriebssystem bekannten Task die Taskadresse hinterlegt ist, an der sich das Programm-Modul zur Realisierung der betreffenden Task befindet. Zudem ist in dem Speicherbereich SPT zu jeder Task auch die Returnadresse hinterlegt, an der das Betriebssystemprogramm nach Abarbeitung der Task fortgesetzt werden soll, d.h. auf welche Programmadresse nach Abarbeitung der Task zurückgesprungen werden soll, damit das Zuteilungssubsystem ZUS weiter zur Ausführung kommen kann. Damit wird bei Beginn und bei Beendigung einer Task jeweils ein indirekter Programmsprung auf eine in dem Speicherbereich SPT zu der betreffenden Task bereitgehaltenen TaskAdresse bzw. Return-Adresse ausgeführt.

Die Speicheradressen Task x, Task x+1 in dem Speicherbereich SPT, an denen die jeweiligen, den Tasken zugehörigen Taskund Return-Adressen gespeichert sind, sind vom Betriebssystem festgelegt und werden von diesem nicht verändert. In der Figur ist die Adresse, die vom erfindungsgemäßen Verfahren mittels einer betriebstechnischen Anweisung verändert wird, schraffiert dargestellt..

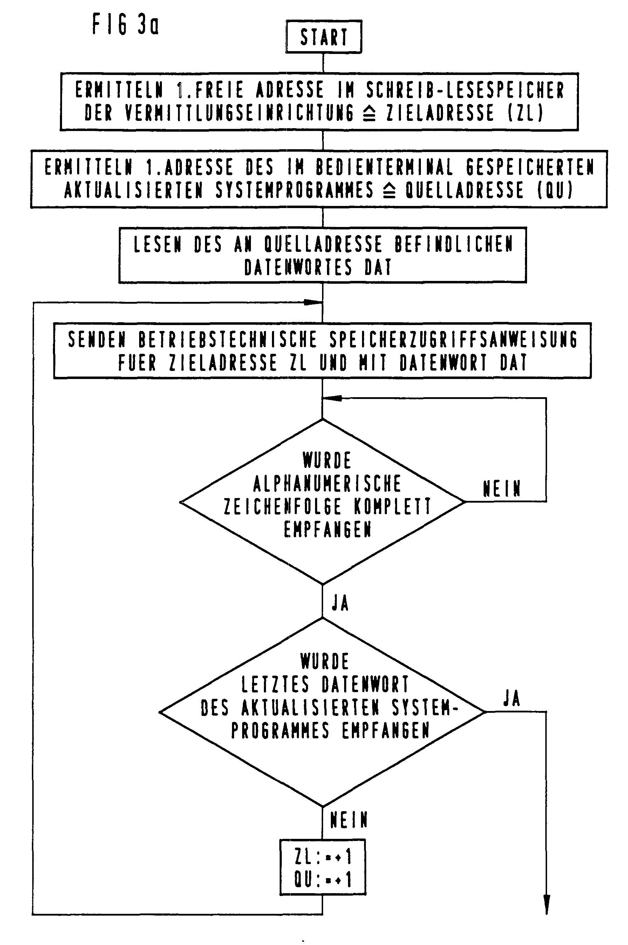

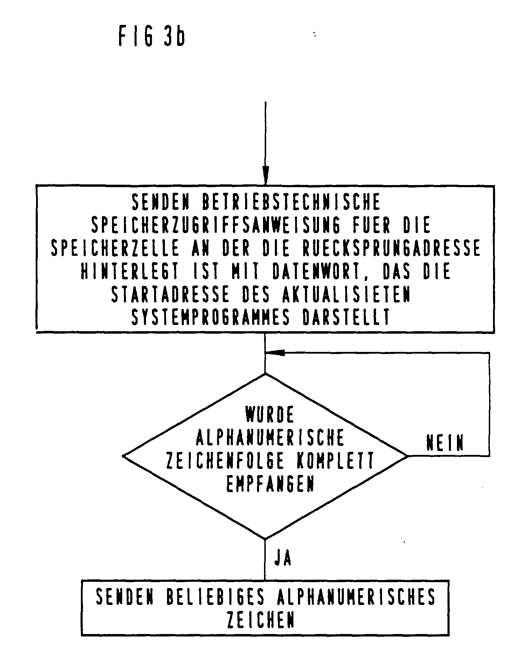

In Figur 3a, b ist ein Ablaufdiagramm zur Veranschaulichung der aufbauend auf die Erfindung im Betriebsterminal BT ablaufenden Verfahrensschritte dargestellt. Bevor diese Verfahrensschritte eingeleitet werden, ist das aktualisierte Systemprogramm im Betriebsterminal BT, z.B. in Form einer Diskette, hinterlegt worden und zumindest teilweise im Schreib-Lese-Speicher RAM eingespeichert. Nach dem Start des Verfahrens wird zunächst die erste Adresse eines im RAM-Bereich der Vermittlungseinrichtung VE frei zur Verfügung stehenden Speicherbereiches mit ausreichender Größe zur Einspeicherung des aktualisierten Systemprogramms ermittelt. Dies kann entweder durch betriebstechnische Anweisungen erfolgen oder die erste freie Adresse ist dem Betriebsterminal anderweitig mitgeteilt worden. Im weiteren wird die erste Adresse des aktualisierten Systemprogrammes ermittelt und das an dieser Adresse befindliche Datenwort wird ausgelesen.

Eine betriebstechnische Speicherzugriffsanweisung mit der Zieladresse ZL und dem Datenwort DAT wird über die serielle Schnittstelle an die Vermittlungseinrichtung VE übertragen. Bei dieser Übertragung werden nacheinander die einzelnen alphanumerischen Zeichen, die zur Bildung der betriebstechnischen Speicherzugriffsanweisung sowie der Zieladresse und des Datenwortes erforderlich sind, über die Schnittstellenleitung gesendet. Diese Verfahrensschritte wiederholen sich solange, bis das gesamte, in dem Betriebsterminal BT befindliche, aktualisierte Systemprogramm in dem RAM-Speicher der Vermittlungseinrichtung eingespeichert wurde. Damit befinden sich dann in der Vermittlungseinrichtung VE zwei komplette, für sich selbständige und voneinander unabhängige Systemprogramme; nämlich ein altes, im ROM-Speicherbereich hinterlegtes, und das neue, vom Betriebsterminal BT übermittelte aktualisierte Systemprogramm.

Anschließend wird vom Betriebsterminal BT eine betriebstechnische Speicherzugriffsanweisung an die Vermittlungseinrichtung VE übermittelt, die ein Datenwort auf die, die Return-Adresse der Lese-Task beinhaltenden Speicheradresse Task x+1 einspeichern soll. Das betreffende Datenwort stellt die Startadresse des im RAM-Speicher hinterlegten aktualisierten Systemprogrammes dar. Nachdem die betreffende betriebstechnische Speicherzugriffsanweisung komplett übermittelt wurde, d.h. die alphanumerische Zeichenfolge, die als Speicherzugriffsanweisung verstanden wird, als Ganzes empfangen wurde, wird von der Betriebstechnik-Software in der Vermittlungseinrichtung VE die Return-Adresse der Lese-Task durch die Startadresse des aktualisierten Systemprogrammes überschrieben. Beim nächsten von dem Betriebsterminal BT übermittelten alphanumerischen Zeichen erfolgt der Programmrücksprung von der Lese-Task nicht mehr in das Betriebssystem, sondern auf die Startadresse des aktualisierten Systemprogrammes, das dann als das für die Vermittlungseinrichtung VE gültige Systemprogramm behandelt wird.

## Patentansprüche

1. Verfahren zum Aktualisieren eines in Festwertspeichern (ROM) einer programmgesteuerten Vermittlungseinrichtung (VE) hinterlegten Systemprogramms, mit
einem betriebstechnikorientierten Systemprogrammteil zur Ausführung von betriebstechnischen Anweisungen, insbesondere von adreß- und datenspezifizierenden Zugriffsanweisungen auf einen Schreib-Lesespeicherbereich (RAM) der Vermittlungseinrichtung (VE), zu deren Eingabe eine Datenverarbeitungseinrichtung (BT) im Sinne eines betriebstechnischen Terminals anschließbar ist, und mit
einem Lese-Programmodul zum bedarfsgesteuerten Einlesen von Anweisungen repräsentierenden Folgen von an die Vermittlungseinrichtung (VE) übermittelten Informationseinheiten, wobei von der Datenverarbeitungseinrichtung (BT)
zunächst Anweisungen zum Einspeichern eines in dieser gespeicherten aktualisierten Systemprogramms in den Schreib-Lesespeicherbereich (RAM) der Vermittlungseinrichtung (VE) übermittelt werden, und
danach eine Anweisung zum Einspeichern einer Programmstartadresse für das aktualisierte Systemprogramm an die zur Speicherung der nach Beendigung des Lese-Programmoduls von der Prozessoreinrichtung (UP) der Vermittlungseinrichtung (VE) zu adressierenden Rücksprungadresse dienende Speicherstelle (Task x+1) übermittelt wird.

2. Verfahren nach Anspruch 1,
**dadurch gekennzeichnet,**
**daß** nach Übermittlung der Anweisung zum Einspeichern der Programmstartadresse eine weitere vom Lese-Programmodul einzulesende Informationseinheit von der Datenverarbeitungseinrichtung (BT) zur Vermittlungseinrichtung (VE) übermittelt wird, um nach Einlesen der Informationseinheit einen zur Startadresse des aktualisierten Systemprogramms führenden Rücksprung vom Lese-Programmodul zu veranlassen.

## Claims

1. Method for updating a system program stored in read-only memories (ROM) in a program-controlled switching facility (VE), with
an operation and maintenance-oriented system program part for carrying out operational instructions, in particular access instructions specifying address and data and relating to a read/write memory area (RAM) in the switching facility (VE), for the purpose of whose input a data processing device (BT) can be connected as an operational terminal, and with
a read program module for the demand-controlled reading-in of series of information units transmitted to the switching facility (VE) which represent instructions, the data processing device (BT) first transmitting instructions for storing an updated system program, stored in said data processing device, in the read/write memory area (RAM) of the switching facility (VE), and
an instruction for storing a program start address for the updated system program then being transmitted to the memory location (Task x+1) used to store the return address which is to be addressed by the processor device (UP) in the switching facility (VE) when the read program module has ended.

2. Method according to Claim 1,
**characterized**
**in that**, when the instruction for storing the program start address has been transmitted, a further information unit to be read in by the read program module is transmitted from the data processing device (BT) to the switching facility (VE) in order to prompt the read program module to return to the start address of the updated system program when the information unit has been read in.

## Revendications

1. Procédé pour actualiser un programme de système mémorisé dans des mémoires mortes (ROM) d'un dispositif de commutation (VE) commandé par programme, avec
une partie de programme de système axée sur la technique d'exploitation pour la réalisation d'instructions concernant la technique d'exploitation, notamment d'instructions d'accès spécifiant des adresses et des données à une zone de mémoire vive (RAM) du dispositif de commutation (VE), pour l'entrée desquelles une unité de traitement de données (BT) en tant que terminal de technique d'exploitation peut être raccordée, et avec
un module de programme de lecture pour la lecture, commandée par les besoins, de séquences, représentant des instructions, d'unités d'informations transmises au dispositif de commutation (VE), dans lequel l'unité de traitement de données (BT)
transmet d'abord des instructions pour mémoriser un programme de système actualisé, mémorisé dans cette unité de traitement de données, dans la zone de mémoire vive (RAM) du dispositif de commutation (VE), et
transmet ensuite une instruction pour mémoriser une adresse de début de programme pour le programme de système actualisé à l'emplacement de mémoire (Task x + 1) servant à mémoriser l'adresse de retour à adresser après la fin du module de programme de lecture par l'unité de processeur (UP) du dispositif de commutation (VE).
2. Procédé selon la revendication 1,
**caractérisé par le fait que**, après la transmission de l'instruction pour mémoriser l'adresse de début de programme, l'unité de traitement de données (BT) transmet au dispositif de commutation (VE) une autre unité d'information à lire par le module de programme de lecture afin de provoquer, après la lecture de l'unité d'information, un retour du module de programme de lecture menant à l'adresse de début du programme de système actualisé.
